# FASCICULE DE BREVET EUROPEEN

(11) **EP 3 400 148 B1**
(45) Date de publication et mention de la délivrance du brevet: **04.12.2019**
(21) Numéro de dépôt: 17702421.3
(22) Date de dépôt: 04.01.2017
(51) Int. Cl.: B60L 53/00

(54) **PROCÉDÉ ET SYSTÈME DE DÉCHARGE ACTIVE DES CAPACITÉS D'ENTRÉE D'UN CHARGEUR EMBARQUÉ DE VÉHICULE ÉLECTRIQUE OU HYBRIDE**
VERFAHREN UND SYSTEM ZUR AKTIVEN ENTLADUNG DER EINGANGSKONDENSATOREN IN EINER BORDLADEVORRICHTUNG FÜR EIN ELEKTRO- ODER HYBRIDFAHRZEUG
METHOD AND SYSTEM FOR ACTIVELY DISCHARGING THE INPUT CAPACITORS OF AN ONBOARD CHARGER OF AN ELECTRIC OR HYBRID VEHICLE

(30) Priorité: 06.01.2016 FR 1650063
(43) Date de publication de la demande: 14.11.2018
(73) Titulaire: Renault S.A.S., 92100 Boulogne-Billancourt (FR)
(72) Inventeur: KVIESKA, Pedro, 78000 Versailles (FR); MERIENNE, Ludovic, 91190 Gif sur Yvette (FR)
(86) Numéro de dépôt international: PCT/FR2017/050009
(87) Numéro de publication internationale: WO 2017/118807

(56) Documents cités:
- JP-A- 2015 050 895

## Description

La présente invention se rapporte de manière générale au domaine de l'électrotechnique et au domaine de l'automobile. L'invention concerne plus précisément un procédé de décharge active de capacités d'un chargeur embarqué de batterie de traction d'un véhicule électrique ou hybride.

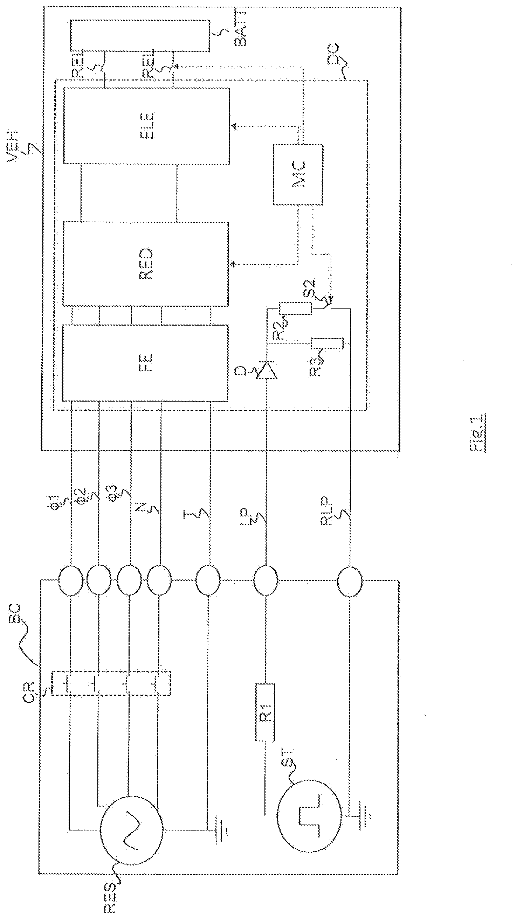

Actuellement les bornes de charge pour véhicule électrique utilisent la norme « SAE J1772 », qui régit la communication entre une borne de charge et un véhicule électrique ou hybride branché à celle-ci, afin notamment de déterminer le courant maximum disponible pour une borne de charge. Cette communication est possible via une connexion appelée « ligne pilote ». La **figure 1** illustre une telle connexion entre une borne de charge BC et un véhicule électrique ou hybride VEH.

La borne de charge BC est ici connectée à un réseau RES triphasé fournissant trois phases d'alimentation φ1, φ2, φ3 et une phase neutre N, ainsi qu'une connexion à la terre T. La borne de charge BC comporte également une source de tension ST hachée en créneaux variant de -12 volts (V) à +12V, aux bornes de laquelle sont connectées la ligne pilote LP et sa ligne de retour RLP.

Selon la norme « SAE J1772 », côté borne de charge BC, une impédance résistive R1 est reliée sur la ligne pilote LP entre la source de tension ST et le véhicule VEH. Côté véhicule VEH la ligne pilote LP est connectée à une diode D laissant passer le courant vers une première branche connectée entre l'anode de la diode D et la ligne de retour RLP, comportant une résistance R3. En parallèle à cette première branche est connectée une deuxième branche comportant une résistance R2 en série avec un commutateur S2.

Cette configuration forme un pont diviseur aux bornes duquel, lorsque le véhicule VEH est connecté à la borne de charge BC :
- lorsque le commutateur S2 est ouvert, la tension lue par la borne BC ou par le véhicule VEH entre la ligne LP et la ligne de retour RLP vaut 9V, c'est l'état « B » de la norme,
- et lorsque le commutateur S2 est fermé, la tension lue par la borne BC ou par le véhicule VEH entre la ligne LP et la ligne de retour RLP vaut 6V, c'est l'état «C» de la norme.

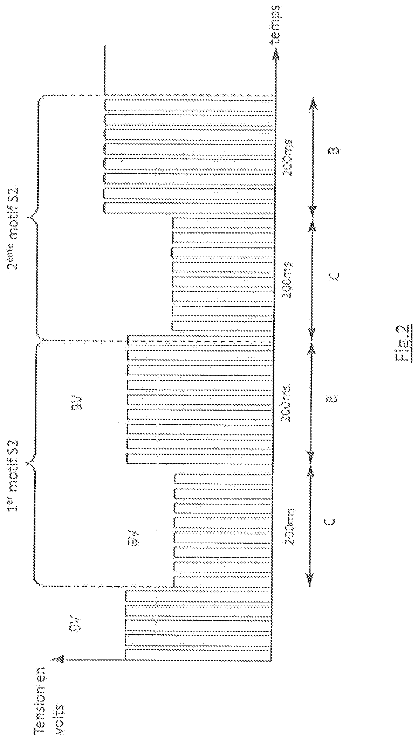

Afin de permettre à une borne de charge BC d'identifier un véhicule VEH parmi plusieurs connectés à cette même borne, une des normes « SAE » prévoit qu'une borne de charge BC puisse demander au véhicule VEH d'alterner un certain nombre de fois les états « B » et « C » avec une période de 400ms (millisecondes), chaque état étant maintenu sur une durée de 200ms. La **figure 2** illustre la tension sur la ligne pilote LP en fonction du temps lorsqu'une telle requête de commutation, appelée requête « toggle », est satisfaite par le véhicule VEH.

Lorsque le commutateur S2 est fermé, c'est-à-dire à l'état « C », la borne de charge BC doit fermer ses contacteurs de puissance CR qui permettent d'alimenter en courant un dispositif de charge DC d'une batterie de traction BATT du véhicule VEH, branché aux phases d'alimentation φ1, φ2, φ3 ainsi qu'à la phase de neutre N et à la connexion à la terre T. En effet l'état « C » indique à la borne BC que le véhicule VEH est prêt pour être chargé, les relais REL reliant la batterie BATT au dispositif de charge DC sont donc fermés. De même, lorsque le commutateur S2 est ouvert, c'est-à-dire à l'état « B », la borne de charge BC doit ouvrir ses contacteurs de puissance CR. L'ouverture des contacteurs CR doit s'effectuer en moins de 100ms selon la norme, pour des raisons de sécurité. Par contre leur fermeture doit s'effectuer en moins de 3 secondes, et peut donc être beaucoup plus lente.

Les inventeurs ont constaté que ces dispositions de la norme nécessitent que le dispositif de charge DC puisse supporter des fermetures/ouvertures très rapides des contacteurs CR de puissance. En effet, aucune garantie n'est donnée qu'une borne de charge n'ait pas le temps de fermer ses contacteurs de puissance sur chaque demi-période de 200ms lorsqu'un véhicule satisfait à une requête de commutation, bien qu'une telle rapidité de fermeture des contacteurs de puissance n'ait pas encore été constatée sur des bornes de charge.

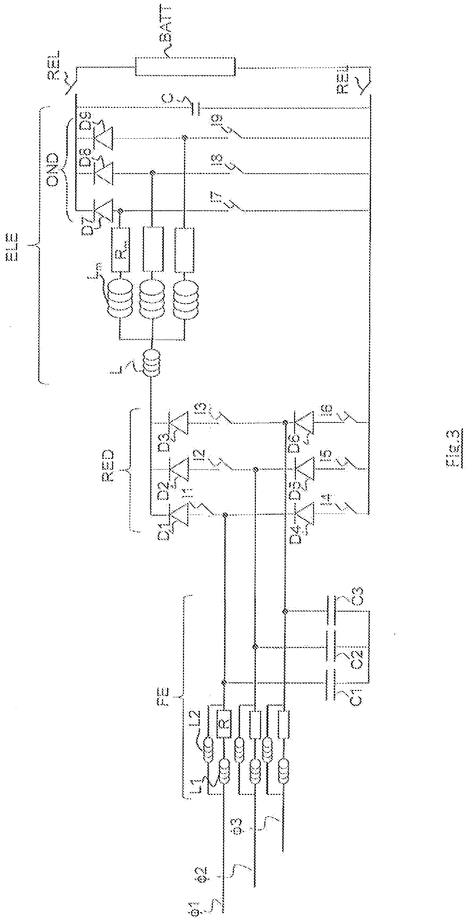

Or certains chargeurs, permettant la charge d'une batterie de traction à partir d'un réseau triphasé, comportent des capacités différentielles en entrée et n'ont pas de circuit de pré-charge empêchant celles-ci de se charger très rapidement lors d'une fermeture des contacteurs de puissance d'une borne de charge. C'est le cas du dispositif de charge DC, qui comporte dans son filtre d'entrée FE trois capacités différentielles C1, C2 et C3 représentées **figure 3****.** Actuellement un tel chargeur présente généralement un circuit de décharge passive permettant de décharger ces capacités différentielles en une vingtaine de secondes. Cela pose un problème lorsque deux fermetures en moins de 400ms des contacteurs de puissance se succèdent. En effet les capacités différentielles ayant été chargées lors de la première fermeture, lors de la deuxième fermeture les capacités différentielles n'ont pas eu le temps de se décharger et si le courant triphasé arrive sur une phase en opposition de tension avec la charge d'une des capacités différentielles, cela crée un appel de courant potentiellement destructeur pour les composants du dispositif de charge.

Les brevets US5523665 et US8406023 proposent des circuits de décharge actifs permettant de décharger rapidement le filtre capacitif d'entrée d'un chargeur, sur détection d'une coupure d'alimentation réseau. L'énergie des capacités est dirigée via des circuits de décharge dédiés vers des résistances pour les dissiper. Ces solutions nécessitent une modification relativement coûteuse du chargeur. Notamment la solution proposée dans le brevet US8406023 est complexe du fait de la protection nécessaire des composants du circuit de décharge contre les surtensions, le filtre capacitif étant en amont du redresseur.

Le document JP-A-2015 050 895 divulgue un procédé de décharge d'un capacité. Ceci est accompli par commuter les interrupteurs dans les onduleurs.

Un des buts de l'invention est de remédier à au moins une partie des inconvénients de la technique antérieure en fournissant un procédé et un système permettant une décharge rapide des capacités en entrée d'un chargeur embarqué de batterie de véhicule électrique ou hybride, et sans modification complexe et coûteuse du chargeur.

A cette fin, l'invention propose un procédé de décharge active d'au moins une capacité en entrée d'un dispositif de charge de véhicule électrique ou hybride apte à être connecté à un réseau d'alimentation monophasé ou triphasé, ledit dispositif comportant ladite au moins une capacité en entrée d'un étage redresseur de tension à diodes dont la sortie est connectée à l'entrée d'un étage élévateur de tension comportant des interrupteurs, une batterie de traction étant connectée en sortie dudit étage élévateur de tension par l'intermédiaire de relais, ledit procédé étant caractérisé en ce qu'il comporte, lorsque ledit réseau est connecté audit dispositif et lorsque lesdits relais sont fermés, des étapes de:
- détection d'une coupure d'alimentation du réseau,
- commande en ouverture des interrupteurs de l'étage élévateur de tension, lesdits interrupteurs étant maintenus ouverts au moins jusqu'au blocage des diodes dudit étage redresseur,
- commutation des interrupteurs de l'étage élévateur de tension jusqu'à ce que le niveau de tension de ladite au moins une capacité soit inférieur à un seuil de tension prédéterminé.

Grâce à l'invention, les capacités d'entrée du dispositif de charge sont déchargées rapidement après une ouverture du commutateur S2, sans utiliser de circuit dédié de décharge. L'invention présente l'avantage supplémentaire de récupérer l'énergie emmagasinée dans les capacités d'entrée dans la batterie de traction. Il est à noter que dans cette demande, on appelle « batterie de traction » une batterie adaptée à alimenter un moteur électrique fournissant un couple apte à mettre en mouvement les roues d'un véhicule électrique ou hybride, par exemple une batterie Li-ion de tension nominale d'environ 400V. Une batterie de traction est donc adaptée pour alimenter un moteur utilisé aussi bien en traction qu'en propulsion du véhicule.

Selon une caractéristique avantageuse du procédé selon l'invention, lors de l'étape de commutation, la commutation des interrupteurs de l'étage élévateur de tension s'effectue selon un rapport cyclique évoluant de 0% à 100% en une durée prédéterminée inférieure à 0,5ms. Cette progression du rapport cyclique permet de dissiper beaucoup moins l'énergie de ladite au moins une capacité d'entrée dans les inductances de l'étage élévateur.

Préférentiellement, lors de l'étape de commutation, le rapport cyclique de commutation des interrupteurs de l'étage élévateur de tension évolue linéairement à une fréquence de pas de calcul de 10kHz. Cette évolution du rapport cyclique est en effet simple à implémenter tout en permettant de limiter efficacement les pertes d'énergie par dissipation dans les inductances de l'étage élévateur.

Lorsque ledit étage redresseur comporte des interrupteurs en série avec lesdites diodes, l'étape de commande en ouverture des interrupteurs de l'étage élévateur de tension est précédée d'une étape de fermeture des interrupteurs dudit étage redresseur.

Préférentiellement, l'étape de commutation des interrupteurs est programmée dans un délai supérieur à 0,5 millisecondes et inférieur à 99 millisecondes après la commande en ouverture des interrupteurs de l'étage élévateur de tension. Cette contrainte de programmation des étapes du procédé selon l'invention permet d'assurer une décharge de la ou des capacités d'entrée du dispositif de charge dans un délai inférieur à 100 millisecondes et donc avant une nouvelle fermeture du commutateur S2 dans le contexte d'une réponse du véhicule à une requête de commutation.

L'invention concerne aussi un système de décharge active d'au moins une capacité en entrée d'un dispositif de charge de véhicule électrique ou hybride apte à être connecté à un réseau d'alimentation monophasé ou triphasé, ledit dispositif comportant ladite au moins une capacité en entrée d'un étage redresseur de tension à diodes dont la sortie est connectée à l'entrée d'un étage élévateur de tension comportant des interrupteurs, une batterie de traction étant connectée en sortie dudit étage élévateur de tension par l'intermédiaire de relais, ledit système étant caractérisé en ce qu'il comporte :
- des moyens de détection d'une coupure d'alimentation du réseau lorsque lesdits relais sont fermés, aptes à activer des moyens de commande dudit système,
- lesdits moyens de commande étant aptes à commander en ouverture les interrupteurs de l'étage élévateur de tension, et à maintenir en ouverture lesdits interrupteurs de l'étage élévateur de tension au moins jusqu'au blocage des diodes dudit étage redresseur,
- des moyens de commutation des interrupteurs de l'étage élévateur de tension, aptes à commuter lesdits interrupteurs après ledit blocage des diodes dudit étage redresseur, jusqu'à ce que le niveau de tension de ladite au moins une capacité soit inférieur à un seuil de tension prédéterminé.

Avantageusement, lesdits moyens de commutation sont aptes à commuter lesdits interrupteurs de l'étage élévateur de tension après ledit blocage des diodes de l'étage redresseur selon un rapport cyclique évoluant de 0% à 100% en une durée prédéterminée inférieure à 0,5ms.

Préférentiellement, lesdits moyens de commutation sont aptes à commuter lesdits interrupteurs de l'étage élévateur de tension après ledit blocage des diodes de l'étage redresseur selon un rapport cyclique évoluant linéairement à une fréquence de pas de calcul de 10kHz.

Lorsque ledit étage redresseur comporte des interrupteurs en série avec lesdites diodes, lesdits moyens de détection sont aptes à activer des moyens de fermeture desdits interrupteurs dudit étage redresseur.

Préférentiellement, le système selon l'invention comporte des moyens d'activation desdits moyens de commutation des interrupteurs dans un délai supérieur à 0,5 millisecondes et inférieur à 99 millisecondes après une activation desdits moyens de commande par lesdits moyens de détection.

Le système de décharge active selon l'invention présente des avantages analogues à ceux du procédé de décharge active selon l'invention.

D'autres caractéristiques et avantages apparaîtront à la lecture d'un mode de réalisation préféré décrit en référence aux figures dans lesquelles :
- la figure 1 représente un véhicule électrique ou hybride connecté à une borne de charge, et comportant un dispositif de décharge active selon l'invention, cette figure 1 ayant déjà été commentée en partie pour ce qui concerne la communication entre la borne de charge et le véhicule,
- la figure 2, déjà commentée, représente la réalisation d'une commutation effectuée par le véhicule en réponse à une requête de commutation selon la norme SAE sur la ligne pilote de la borne de charge,
- la figure 3 représente plus précisément le dispositif de charge du véhicule électrique ou hybride de la figure 1,
- la figure 4 représente des étapes d'un procédé de décharge active selon l'invention, dans ce mode de réalisation,
- et la figure 5 représente la tension résiduelle aux bornes des capacités en entrée du dispositif de charge lors de la réalisation des étapes du procédé de décharge active selon l'invention.

Selon un mode préféré de réalisation de l'invention représenté à la **figure 1****,** un système de décharge active selon l'invention est implémenté de manière logicielle dans des moyens de contrôle MC du dispositif de charge DC du véhicule électrique ou hybride VEH. Ces moyens de contrôle sont éventuellement répartis sur plusieurs processeurs.

Ces moyens de contrôle sont aptes à contrôler les interrupteurs du dispositif de charge DC, notamment ceux d'un étage redresseur RED et ceux d'un étage élévateur ELE du dispositif de charge DC. Ils sont également aptes à contrôler le commutateur S2 permettant de moduler la tension sur la ligne pilote LP, ainsi qu'à contrôler les relais REL reliant la batterie BATT du véhicule VEH à l'étage élévateur ELE du dispositif de charge DC.

La structure du dispositif de charge DC est plus précisément visible sur la **figure 3****.**

Le filtre d'entrée FE du dispositif de charge DC reçoit chacune des phases d'alimentation φ1, φ2, φ3 au niveau d'une connexion à un filtre inductif constitué d'une inductance L1 montée en série avec une résistance R, et d'une inductance L2 montée en parallèle à la branche comportant en série l'inductance L1 et la résistance R. La sortie de chaque filtre inductif du filtre d'entrée FE est connectée dans le filtre d'entrée FE, à un filtre capacitif constitué des capacités différentielles C1, C2 et C3.

Les capacités différentielles C1, C2, C3 comportent chacune une première extrémité et une deuxième extrémité. Les capacités C1, C2 et C3 sont connectées en étoile en leurs premières extrémités et reliées chacune en leurs deuxièmes extrémités à une sortie d'un des filtres inductifs correspondant à une phase d'alimentation ϕ1, ϕ2, ou ϕ3. Les trois sorties des filtres inductifs se prolongent en sortie du filtre d'entrée FE et sont connectées aux entrées de l'étage redresseur RED.

Dans ce mode de réalisation de l'invention, le réseau d'alimentation RES est un réseau triphasé, les trois connexions de phase ϕ1, ϕ2, ou ϕ3 en entrée du filtre d'entrée FE sont donc chacune connectées à une phase d'alimentation du réseau d'alimentation RES. Cependant en variante, le réseau d'alimentation RES est un réseau monophasé. Dans cette variante, seules deux connexions de phase ϕ1 et ϕ3 en entrée du filtre d'entrée FE sont connectées au réseau d'alimentation RES, l'une à la phase d'alimentation du réseau monophasé et l'autre à la phase de neutre du réseau monophasé. Dans cette variante aucun courant de circule dans la capacité C2 et un bras de l'étage redresseur RED auquel la capacité C2 est connectée. Les capacités C1 et C3 sont alors équivalentes à une unique capacité connectée entre la phase d'alimentation et la phase de neutre.

L'étage redresseur RED comporte trois bras dont les points milieux sont ses entrées et sont reliés chacun à une capacité C1, C2 ou C3 du filtre d'entrée FE en leurs deuxièmes extrémités. Chaque bras comporte respectivement, montés en série entre son point milieu et la borne négative de la batterie BATT formant une première sortie de l'étage redresseur RED :
- une diode respective D4, D5 ou D6 dont la cathode est fixée au point milieu du bras et
- un interrupteur « bas » respectif I4, I5 ou I6, relié d'un côté à l'anode de la diode respective D4, D5 ou D6 et de l'autre côté à la borne négative de la batterie BATT. On appelle ici interrupteur « bas » un interrupteur de l'étage redresseur RED connecté à la borne négative de la batterie BATT.

Chaque bras de l'étage redresseur RED comporte également, montés en série entre son point milieu et une deuxième sortie de l'étage redresseur RED, connectée à une première entrée d'un étage élévateur de tension ELE :
- une diode respective D1, D2 ou D3 dont la cathode est fixée à la deuxième sortie de sortie de l'étage redresseur RED, et
- un interrupteur « haut» respectif I1, I2 ou I3, relié d'un côté à l'anode de la diode respective D1, D2 ou D3 et de l'autre côté au point milieu du bras de l'étage redresseur RED. On appelle ici interrupteur « haut » un interrupteur de l'étage redresseur RED connecté au point milieu d'un bras de l'étage redresseur RED.

Les interrupteurs « bas » et « haut » de l'étage redresseur RED sont des transistors de puissance tels que des IGBT (d'après l'anglais « Insulated Gate Bipolar Transistor »).

L'étage élévateur de tension ELE comporte, montés en série entre sa première entrée et une première sortie de l'étage élévateur de tension ELE connectée à la borne positive de la batterie BATT :
- une inductance L
- un moteur de traction comportant trois bobinages statoriques modélisés chacun par une inductance Lₘ montée en série avec une résistance Rₘ,
- et un étage onduleur OND.

L'inductance L est une inductance de valeur semblable à celle des bobinages statoriques de traction auxquels l'inductance L est reliée par le point neutre du moteur de traction. Chacun de ces bobinages statoriques est également relié, à son extrémité non reliée au point neutre du moteur, à une entrée de l'étage onduleur OND qui est un point milieu d'un bras connecté par l'intermédiaire d'une diode, respectivement D7, D8 ou D9, à la borne positive de la batterie BATT par l'intermédiaire d'un relais REL. Chaque point milieu d'un des trois bras de l'étage onduleur OND est également connecté par l'intermédiaire d'un interrupteur de puissance, respectivement I7, I8 ou I9, à la borne négative de la batterie BATT, par l'intermédiaire d'un relais REL.

Une capacité C de lissage est de plus connectée en parallèle aux bornes de la batterie BATT, en sortie de l'onduleur OND.

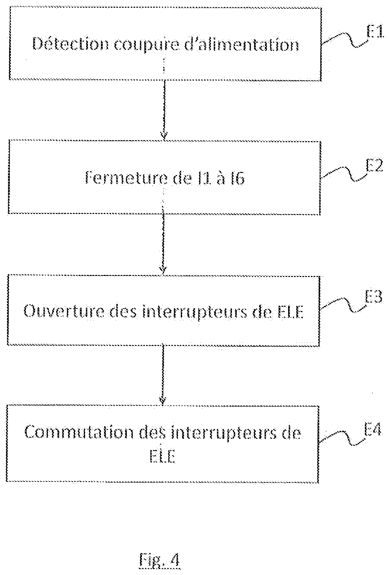

En référence à la **figure 4****,** un procédé de décharge active selon l'invention est représenté sous la forme d'un algorithme comportant des étapes E1 à E4.

Le procédé est mis en œuvre dans les moyens de contrôle MC du dispositif de charge DC. On suppose, dans cet exemple d'utilisation du procédé selon l'invention, que les relais REL sont fermés, et que le dispositif de charge DC obéit à une requête de commutation dite requête « toggle » envoyée par la borne de charge BC. Celle-ci a fermé une première fois ses contacteurs de puissance CR, chargeant de ce fait les capacités différentielles C1, C2 et C3.

L'étape E1 est la détection d'une coupure d'alimentation du réseau RES, par exemple grâce à des capteurs de courant situés au niveau des connexions du filtre d'entrée FE aux phases d'alimentation du réseau RES. Lorsque les moyens de contrôle MC reçoivent de ces capteurs des valeurs de courant proches de zéro pour l'ensemble des phases d'alimentation, alors une coupure d'alimentation réseau est détectée.

L'étape suivante E2 est la fermeture des interrupteurs I1 à I6 de l'étage redresseur RED, par les moyens de contrôle MC. L'étage redresseur RED fonctionne alors comme un simple pont de diodes.

L'étape suivante E3 est l'ouverture des interrupteurs I7 à I9 de l'étage élévateur de tension ELE. Pour cela les moyens de contrôle MC communiquent avec un microcontrôleur de l'étage élévateur ELE. Les étapes E1 à E3 permettent aux capacités C1 à C3 de se décharger partiellement dans la batterie BATT, la tension de la batterie BATT finissant par s'opposer à cette décharge, ce qui se traduit par le blocage des diodes D1, D2 D3 et D7, D8, D9. Dans cette étape E3, les interrupteurs I7 à I9 de l'étage élévateur de tension ELE sont maintenus en ouverture au moins jusqu'au blocage des diodes de l'étage redresseur RED. Ce blocage est par exemple détecté par une valeur de courant circulant dans l'inductance L atteignant la valeur nulle, cette valeur étant remontée aux moyens de contrôle MC par un capteur de courant en sortie de l'étage redresseur RED. En variante, ce blocage des diodes n'est pas détecté, les moyens de contrôle MC réalisant dans ce cas l'étape suivante E4 au bout d'une durée prédéterminée après l'étape E2, par exemple 0,5 millisecondes.

L'étape suivante E4 est la commutation des interrupteurs I7, I8 et I9 de l'étage élévateur de tension ELE jusqu'à ce que le niveau de tension entre deux points d'entrée de l'étage redresseur RED soit inférieur à un seuil de tension prédéterminé, par exemple 1 volt. En effet, la tension entre deux points d'entrée de l'étage redresseur RED est représentative de la tension résiduelle aux bornes des capacités différentielles C1, C2 et C3. La valeur de cette tension est donnée par exemple par un ou plusieurs capteurs de tension en entrée de l'étage redresseur RED, aux moyens de contrôle MC.

La commutation des interrupteurs I7, I8 et I9 dans cette étape E4 est effectuée par une commande des moyens de contrôle MC au microcontrôleur de l'étage élévateur ELE, qui effectue un pilotage de ces interrupteurs par modulation à largeur d'impulsions selon un rapport cyclique croissant de 0% (interrupteurs ouverts sur toute une période de modulation) à 100% (interrupteurs fermés sur toute une période de modulation) de manière linéaire. Par exemple l'évolution de ce rapport cyclique suit une rampe avec un pas de calcul à 10kHz (kiloHertz). Cette rampe est calibrée de manière à assurer l'absence de surcourant à cause des dynamiques et l'acheminement d'un maximum de courant vers la batterie BATT.

En effet dans cette étape E4, la progressivité du rapport cyclique de commutation des interrupteurs de l'étage élévateur de tension ELE permet de décharger complètement les capacités différentielles C1, C2 et C3 sans que leur énergie soit majoritairement dissipée en pertes dans les inductances en aval de l'étage redresseur RED.

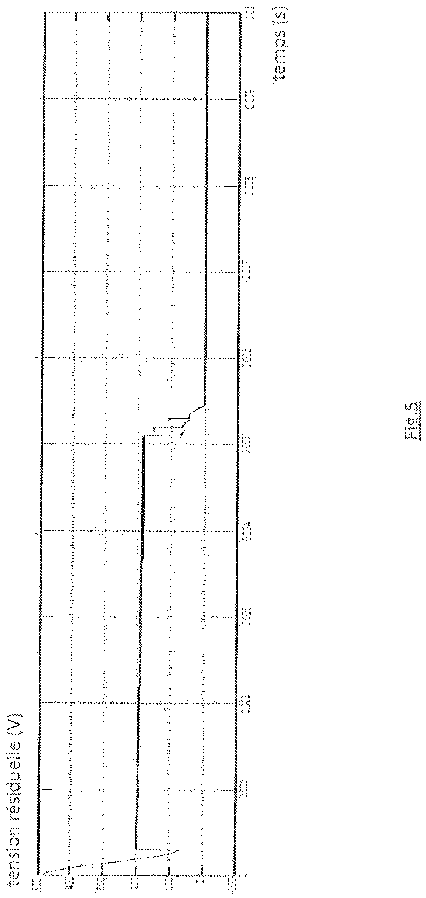

La **figure 5** montre l'évolution de la tension résiduelle entre les deuxièmes extrémités des capacités C1 et C3, c'est-à-dire en sortie du filtre d'entrée FE entre la connexion correspondant à la phase d'alimentation ϕ1 et la connexion correspondant à la phase d'alimentation ϕ3, au cours des étapes E1 à E4, en se plaçant dans une situation initiale de pire cas. Dans ce pire cas initial, l'ouverture des contacteurs de puissance CR, détectée à l'étape E1, se fait à un moment où, le réseau triphasé RES fournissant une tension efficace de 230V :
- la tension aux bornes de la capacité C1 vaut 325V,
- la tension aux bornes de la capacité C2 vaut -162,5V,
- et la tension aux bornes de la capacité C3 vaut -162,5V.

Dans cette situation initiale, on se place également dans le cas où la tension de la batterie Batt vaut 270V, c'est-à-dire bien en-deçà de sa tension nominale de 400V.

La tension résiduelle aux bornes de l'ensemble des capacités C1 et C3 en série vaut donc 500V au moment de l'étape E1, et diminue lors de l'étape E3 de décharge des capacités dans la batterie BATT par simple fermeture des interrupteurs du dispositif de charge DC. Au bout de 0,3 millisecondes environ on observe une remontée de la tension résiduelle due au blocage des diodes de l'étage redresseur RED. Au bout de 5 millisecondes environ l'étape E4 de commutation progressive est déclenchée et permet de ramener cette tension résiduelle à une valeur nulle.

On observe que la programmation des étapes E1 à E4 dans les moyens de contrôle MC est réalisée en moins de 10 millisecondes, ce qui est suffisant pour sécuriser les composants du dispositif de charge lors d'une commutation réalisée à la demande de la borne de charge BC pour identification du véhicule VEH. Etant donné l'efficacité de l'étape E4, celle-ci devrait être programmée de préférence dans un délai supérieur à 0,5 millisecondes et inférieur à 99 millisecondes après ouverture des interrupteurs de l'étage élévateur de tension ELE à l'étape E3, afin de rendre le dispositif de charge DC compatible avec les requêtes de commutation telles que définies par la norme SAE.

Bien que dans ce mode de réalisation, l'étage redresseur RED comporte des interrupteurs, l'invention est réalisable sur un dispositif de charge comportant un simple pont de diodes comme redresseur. Dans ce cas l'étape E2 n'est pas réalisée. D'autres modes de réalisation sont bien entendu envisageables, dans lesquels notamment le dispositif de charge DC a une topologie différente. Par exemple en variante le dispositif de charge DC n'utilise pas les bobinages statoriques du moteur de traction comme tampons d'énergie dans l'étage élévateur de tension, mais d'autres inductances. Dans une autre variante l'onduleur présente une diode sur chacun de ses demi-bras, un transistor étant disposé en parallèle de chaque diode. Dans encore une autre variante les relais batteries sont intégrés physiquement dans la batterie de traction.

## Revendications

1. Procédé de décharge active d'au moins une capacité (C1, C2, C3) en entrée d'un dispositif de charge (DC) de véhicule électrique ou hybride (VEH) apte à être connecté à un réseau d'alimentation monophasé ou triphasé (RES), ledit dispositif (DC) comportant ladite au moins une capacité (C1, C2, C3) en entrée d'un étage redresseur (RED) de tension à diodes (D1, D2, D3, D4, D5, D6) dont la sortie est connectée à l'entrée d'un étage élévateur de tension (ELE) comportant des interrupteurs (I7, I8, I9), une batterie de traction (BATT) étant connectée en sortie dudit étage élévateur de tension (ELE) par l'intermédiaire de relais (REL), ledit procédé étant **caractérisé en ce qu'**il comporte, lorsque ledit réseau (RES) est connecté audit dispositif (DC) et lorsque lesdits relais (REL) sont fermés, des étapes de :
- détection (E1) d'une coupure d'alimentation du réseau (RES),
- commande en ouverture (E3) des interrupteurs (I7, I8, I9) de l'étage élévateur de tension (ELE), lesdits interrupteurs (I7, I8, I9) étant maintenus ouverts au moins jusqu'au blocage des diodes (D1, D2, D3, D4, D5, D6) dudit étage redresseur (RED),
- commutation (E4) des interrupteurs (I7, I8, I9) de l'étage élévateur de tension (ELE) jusqu'à ce que le niveau de tension de ladite au moins une capacité (C1, C2, C3) soit inférieur à un seuil de tension prédéterminé.

2. Procédé de décharge active selon la revendication 1, **caractérisé en ce que** lors de l'étape de commutation (E4), la commutation des interrupteurs (I7, I8, I9) de l'étage élévateur de tension (ELE) s'effectue selon un rapport cyclique évoluant de 0% à 100% en une durée prédéterminée inférieure à 0,5ms.

3. Procédé de décharge active selon la revendication 2, dans lequel lors de l'étape de commutation (E4), le rapport cyclique de commutation des interrupteurs (I7, I8, I9) de l'étage élévateur de tension (ELE) évolue linéairement à une fréquence de pas de calcul de 10kHz.

4. Procédé de décharge active selon l'une quelconque des revendications 1 à 3, dans lequel lorsque ledit étage redresseur (RED) comporte des interrupteurs (I1, I2, I3, I4, I5, I6) en série avec lesdites diodes (D1, D2, D3, D4, D5, D6), l'étape de commande en ouverture (E3) des interrupteurs (I7, I8, I9) de l'étage élévateur de tension (ELE) est précédée d'une étape de fermeture (E2) des interrupteurs (I1, I2, I3, I4, I5, I6) dudit étage redresseur (RED).

5. Procédé de décharge active selon l'une quelconque des revendications 1 à 4, dans lequel l'étape de commutation (E4) des interrupteurs (I7, I8, I9) est programmée dans un délai supérieur à 0,5 millisecondes et inférieur à 99 millisecondes après la commande en ouverture (E3) des interrupteurs (I7, I8, I9) de l'étage élévateur de tension (ELE).

6. Système de décharge active d'au moins une capacité (C1, C2, C3) en entrée d'un dispositif de charge (DC) de véhicule électrique ou hybride (VEH) apte à être connecté à un réseau d'alimentation monophasé ou triphasé (RES), ledit dispositif (DC) comportant ladite au moins une capacité (C1, C2, C3) en entrée d'un étage redresseur (RED) de tension à diodes (D1, D2, D3, D4, D5, D6) dont la sortie est connectée à l'entrée d'un étage élévateur de tension (ELE) comportant des interrupteurs (I7, I8, I9), une batterie de traction (BATT) étant connectée en sortie dudit étage élévateur de tension (ELE) par l'intermédiaire de relais (REL), ledit système étant **caractérisé en ce qu'**il comporte :
- des moyens de détection d'une coupure d'alimentation du réseau (RES) lorsque lesdits relais (REL) sont fermés, aptes à activer des moyens de commande dudit système,
- lesdits moyens de commande étant aptes à commander en ouverture les interrupteurs (I7, I8, I9) de l'étage élévateur de tension (ELE), et à maintenir en ouverture lesdits interrupteurs (I7, I8, I9) de l'étage élévateur de tension (ELE) au moins jusqu'au blocage des diodes (D1, D2, D3, D4, D5, D6) dudit étage redresseur (RED),
- des moyens de commutation des interrupteurs (I7, I8, I9) de l'étage élévateur de tension (ELE), aptes à commuter lesdits interrupteurs (I7, I8, I9) après ledit blocage des diodes (D1, D2, D3, D4, D5, D6) dudit étage redresseur (RED), jusqu'à ce que le niveau de tension de ladite au moins une capacité (C1, C2, C3) soit inférieur à un seuil de tension prédéterminé.

7. Système de décharge active selon la revendication 6, **caractérisé en ce que** lesdits moyens de commutation sont aptes à commuter lesdits interrupteurs (I7, I8, I9) de l'étage élévateur de tension (ELE) après ledit blocage des diodes (D1, D2, D3, D4, D5, D6) de l'étage redresseur (RED) selon un rapport cyclique évoluant de 0% à 100% en une durée prédéterminée inférieure à 0,5ms.

8. Système de décharge active selon la revendication 7, dans lequel lesdits moyens de commutation sont aptes à commuter lesdits interrupteurs (I7, I8, I9) de l'étage élévateur de tension (ELE) après ledit blocage des diodes (D1, D2, D3, D4, D5, D6) de l'étage redresseur (RED) selon un rapport cyclique évoluant linéairement à une fréquence de pas de calcul de 10kHz.

9. Système de décharge active selon l'une quelconque des revendications 6 à 8, dans lequel lorsque ledit étage redresseur (RED) comporte des interrupteurs (I1, I2, I3, I4, I5, I6) en série avec lesdites diodes (D1, D2, D3, D4, D5, D6), lesdits moyens de détection sont aptes à activer des moyens de fermeture desdits interrupteurs (I1, I2, I3, I4, I5, I6) dudit étage redresseur (RED).

10. Système de décharge active selon l'une quelconque des revendications 6 à 9, comportant des moyens d'activation desdits moyens de commutation des interrupteurs (I7, I8, I9) dans un délai supérieur à 0,5 millisecondes et inférieur à 99 millisecondes après une activation desdits moyens de commande par lesdits moyens de détection.

## Patentansprüche

1. Verfahren zur aktiven Entladung mindestens eines Kondensators (C1, C2, C3) am Eingang einer Ladevorrichtung (DC) eines Elektro- oder Hybridfahrzeugs (VEH), die mit einem einphasigen oder dreiphasigen Versorgungsnetz (RES) verbunden werden kann, wobei die Vorrichtung (DC) den mindestens einen Kondensator (C1, C2, C3) am Eingang einer Spannungsgleichrichterstufe (RED) mit Dioden (D1, D2, D3, D4, D5, D6) aufweist, deren Ausgang mit dem Eingang einer Spannungsaufwärtswandlerstufe (ELE) verbunden ist, die Schalter (I7, I8, I9) aufweist, wobei eine Traktionsbatterie (BATT) am Ausgang der Spannungsaufwärtswandlerstufe (ELE) mittels Relais (REL) verbunden ist, wobei das Verfahren **dadurch gekennzeichnet ist, dass** es, wenn das Netz (RES) mit der Vorrichtung (DC) verbunden ist und wenn die Relais (REL) geschlossen sind, folgende Schritte aufweist:
- Erfassung (E1) einer Stromunterbrechung des Netzes (RES),
- Öffnungssteuerung (E3) der Schalter (I7, I8, I9) der Spannungsaufwärtswandlerstufe (ELE), wobei die Schalter (I7, I8, I9) mindestens bis zur Blockierung der Dioden (D1, D2, D3, D4, D5, D6) der Gleichrichterstufe (RED) offen gehalten werden,
- Umschaltung (E4) der Schalter (I7, I8, I9) der Spannungsaufwärtswandlerstufe (ELE), bis der Spannungspegel des mindestens einen Kondensators (C1, C2, C3) unter einer vorbestimmten Spannungsschwelle liegt.

2. Verfahren zur aktiven Entladung nach Anspruch 1, **dadurch gekennzeichnet, dass** im Schaltschritt (E4) die Umschaltung der Schalter (I7, I8, I9) der Spannungsaufwärtswandlerstufe (ELE) gemäß einem Tastverhältnis erfolgt, das sich in einer vorbestimmten Dauer von weniger als 0,5 ms von 0 % bis 100 % entwickelt.

3. Verfahren zur aktiven Entladung nach Anspruch 2, wobei im Schaltschritt (E4) das Schalt-Tastverhältnis der Schalter (I7, I8, I9) der Spannungsaufwärtswandlerstufe (ELE) sich linear mit einer Rechenschrittfrequenz von 10 kHz entwickelt.

4. Verfahren zur aktiven Entladung nach einem der Ansprüche 1 bis 3, wobei, wenn die Gleichrichterstufe (RED) Schalter (I1, I2, I3, I4, I5, I6) in Reihe mit den Dioden (D1, D2, D3, D4, D5, D6) aufweist, vor dem Schritt der Öffnungssteuerung (E3) der Schalter (I7, I8, I9) der Spannungsaufwärtswandlerstufe (ELE) ein Schritt des Schließens (E2) der Schalter (I1, I2, I3, I4, I5, I6) der Gleichrichterstufe (RED) liegt.

5. Verfahren zur aktiven Entladung nach einem der Ansprüche 1 bis 4, wobei der Schaltschritt (E4) der Schalter (I7, I8, I9) in einer Zeitspanne von mehr als 0,5 Millisekunden und weniger als 99 Millisekunden nach der Öffnungssteuerung (E3) der Schalter (I7, I8, I9) der Spannungsaufwärtswandlerstufe (ELE) programmiert ist.

6. System zur aktiven Entladung mindestens eines Kondensators (C1, C2, C3) am Eingang einer Ladevorrichtung (DC) eines Elektro- oder Hybridfahrzeugs (VEH), die mit einem einphasigen oder dreiphasigen Versorgungsnetz (RES) verbunden werden kann, wobei die Vorrichtung (DC) den mindestens einen Kondensator (C1, C2, C3) am Eingang einer Spannungsgleichrichterstufe (RED) mit Dioden (D1, D2, D3, D4, D5, D6) aufweist, deren Ausgang mit dem Eingang einer Spannungsaufwärtswandlerstufe (ELE) verbunden ist, die Schalter (I7, I8, I9) aufweist, wobei eine Traktionsbatterie (BATT) am Ausgang der Spannungsaufwärtswandlerstufe (ELE) mittels Relais (REL) verbunden ist, wobei das System **dadurch gekennzeichnet ist, dass** es aufweist:
- Einrichtungen zur Erfassung einer Stromunterbrechung des Netzes (RES), wenn die Relais (REL) geschlossen sind, die Steuereinrichtungen des Systems aktivieren können,
- wobei die Steuereinrichtungen die Öffnung der Schalter (I7, I8, I9) der Spannungsaufwärtswandlerstufe (ELE) steuern und die Schalter (I7, I8, I9) der Spannungsaufwärtswandlerstufe (ELE) mindestens bis zur Blockierung der Dioden (D1, D2, D3, D4, D5, D6) der Gleichrichterstufe (RED) offen halten können,
- Schalteinrichtungen der Schalter (I7, I8, I9) der Spannungsaufwärtswandlerstufe (ELE), die die Schalter (I7, I8, I9) nach der Blockierung der Dioden (D1, D2, D3, D4, D5, D6) der Gleichrichterstufe (RED) umschalten können, bis der Spannungspegel des mindestens einen Kondensators (C1, C2, C3) unter einer vorbestimmten Spannungsschwelle liegt.

7. System zur aktiven Entladung nach Anspruch 6, **dadurch gekennzeichnet, dass** die Schalteinrichtungen die Schalter (I7, I8, I9) der Spannungsaufwärtswandlerstufe (ELE) nach der Blockierung der Dioden (D1, D2, D3, D4, D5, D6) der Gleichrichterstufe (RED) gemäß einem Tastverhältnis umschalten können, das sich in einer vorbestimmten Dauer von weniger als 0,5 ms von 0 % bis 100 % entwickelt.

8. System zur aktiven Entladung nach Anspruch 7, wobei die Schalteinrichtungen die Schalter (I7, I8, I9) der Spannungsaufwärtswandlerstufe (ELE) nach der Blockierung der Dioden (D1, D2, D3, D4, D5, D6) der Gleichrichterstufe (RED) gemäß einem Tastverhältnis umschalten können, das sich linear mit einer Rechenschrittfrequenz von 10 kHz entwickelt.

9. System zur aktiven Entladung nach einem der Ansprüche 6 bis 8, wobei, wenn die Gleichrichterstufe (RED) Schalter (I1, I2, I3, 14, I5, I6) in Reihe mit den Dioden (D1, D2, D3, D4, D5, D6) aufweist, die Erfassungseinrichtungen Schließeinrichtungen der Schalter (I1, I2, I3, I4, I5, I6) der Gleichrichterstufe (RED) aktivieren können.

10. System zur aktiven Entladung nach einem der Ansprüche 6 bis 9, das Aktivierungseinrichtungen der Schalteinrichtungen der Schalter (I7, I8, I9) in einer Zeitspanne von mehr als 0,5 Millisekunden und weniger als 99 Millisekunden nach einer Aktivierung der Steuereinrichtungen durch die Erfassungseinrichtungen aufweist.

## Claims

1. Method for actively discharging at least one input capacitor (C1, C2, C3) of a charging device (DC) of an electric or hybrid vehicle (VEH) that can be connected to a single-phase or three-phase power supply network (RES), said device (DC) comprising said at least one input capacitor (C1, C2, C3) of a voltage rectifier stage (RED) with diodes (D1, D2, D3, D4, D5, D6) whose output is connected to the input of a voltage step-up stage (ELE) comprising switches (I7, I8, I9), a traction battery (BATT) being connected to the output of said voltage step-up stage (ELE) via relays (REL), said method being **characterized in that** it comprises, when said network (RES) is connected to said device (DC) and when said relays (REL) are closed, steps of:
- detecting (E1) an interruption in the network power supply (RES),
- commanding the switches (I7, I8, I9) of the voltage step-up stage (ELE) to open (E3), said switches (I7, I8, I9) being held open at least until the diodes (D1, D2, D3, D4, D5, D6) of said rectifier stage (RED) are blocked,
- switching (E4) the switches (I7, I8, I9) of the voltage step-up stage (ELE) until the voltage level of said at least one capacitor (C1, C2, C3) is below a predetermined voltage threshold.

2. Active discharge method according to Claim 1, **characterized in that**, in the switching step (E4), the switches (I7, I8, I9) of the voltage step-up stage (ELE) are switched according to a duty cycle varying from 0% to 100% in a predetermined duration of less than 0.5 ms.

3. Active discharge method according to Claim 2, wherein, in the switching step (E4), the duty cycle of the switching of the switches (I7, I8, I9) of the voltage step-up stage (ELE) varies linearly with a calculation interval frequency of 10 kHz.

4. Active discharge method according to any of Claims 1 to 3, wherein, when said rectifier stage (RED) comprises switches (I1, I2, I3, I4, I5, I6) in series with said diodes (D1, D2, D3, D4, D5, D6), the step of commanding the opening (E3) of the switches (I7, I8, I9) of the voltage step-up stage (ELE) is preceded by a step of closing (E2) the switches (I1, I2, I3, I4, I5, I6) of said rectifier stage (RED).

5. Active discharge method according to any of Claims 1 to 4, wherein the step of switching (E4) the switches (I7, I8, I9) is programmed within a period of more than 0.5 milliseconds and less than 99 milliseconds after the command for opening (E3) the switches (I7, I8, I9) of the voltage step-up stage (ELE).

6. System for actively discharging at least one input capacitor (C1, C2, C3) of a charging device (DC) of an electric or hybrid vehicle (VEH) that can be connected to a single-phase or three-phase power supply network (RES), said device (DC) comprising said at least one input capacitor (C1, C2, C3) of a voltage rectifier stage (RED) with diodes (D1, D2, D3, D4, D5, D6) whose output is connected to the input of a voltage step-up stage (ELE) comprising switches (I7, I8, I9), a traction battery (BATT) being connected to the output of said voltage step-up stage (ELE) via relays (REL), said system being **characterized in that** it comprises:
- means for detecting an interruption in the network power supply (RES) when said relays (REL) are closed, capable of activating control means of said system,
- said control means being capable of commanding the switches (I7, I8, I9) of the voltage step-up stage (ELE) to open, and of holding said switches (I7, I8, I9) of the voltage step-up stage (ELE) open at least until the diodes (D1, D2, D3, D4, D5, D6) of said rectifier stage (RED) are blocked,
- means for switching the switches (I7, I8, I9) of the voltage step-up stage (ELE), capable of switching said switches (I7, I8, I9) after said blocking of the diodes (D1, D2, D3, D4, D5, D6) of said rectifier stage (RED), until the voltage level of said at least one capacitor (C1, C2, C3) is below a predetermined voltage threshold.

7. Active discharge system according to Claim 6, **characterized in that** said switching means are capable of switching said switches (I7, I8, I9) of the voltage step-up stage (ELE) after said blocking of the diodes (D1, D2, D3, D4, D5, D6) of the rectifier stage (RED) according to a duty cycle varying from 0% to 100% in a predetermined duration of less than 0.5 ms.

8. Active discharge system according to Claim 7, wherein said switching means are capable of switching said switches (I7, I8, I9) of the voltage step-up stage (ELE) after said blocking of the diodes (D1, D2, D3, D4, D5, D6) of the rectifier stage (RED) according to a duty cycle varying linearly at a calculation interval frequency of 10 kHz.

9. Active discharge system according to any of Claims 6 to 8, wherein, when said rectifier stage (RED) comprises switches (I1, 12, 13, 14, I5, I6) in series with said diodes (D1, D2, D3, D4, D5, D6), said detection means are capable of activating means of closing said switches (I1, I2, I3, I4, I5, I6) of said rectifier stage (RED).

10. Active discharge system according to any of Claims 6 to 9, comprising means for activating said means for switching the switches (I7, I8, I9) within a period of more than 0.5 milliseconds and less than 99 milliseconds after an activation of said control means by said detection means.
